# EUROPÄISCHE PATENTSCHRIFT

(11) **EP 0 414 238 B1**
(45) Veröffentlichungstag und Bekanntmachung des Hinweises auf die Patenterteilung: **15.01.1997**
(21) Anmeldenummer: 90116122.4
(22) Anmeldetag: 23.08.1990
(51) Int. Cl.: G06F 3/16

(54) **Sprachgesteuertes Archivsystem**
Voice controlled archival system
Système d'archivage à commande vocale

(30) Priorität: 25.08.1989 DE 3928049
(43) Veröffentlichungstag der Anmeldung: 27.02.1991
(73) Patentinhaber: GRUNDIG E.M.V. Elektro-Mechanische Versuchsanstalt Max Grundig GmbH & Co. KG, D-90762 Fürth (DE)
(72) Erfinder: Schröder, Günter, Grundig E.M.V., Max Grundig, D-8510 Fürth/Bay (DE)

(56) Entgegenhaltungen:
- EP-A- 0 051 258
- EP-A- 0 150 813
- IEEE TRANSACTIONS ON ENERGY CONVERSION. Bd. 3, Nr. 1, März 1988, NEW YORK US Seiten 71 - 77; KOCH ET AL.: 'INTELLIGENT USER INTERFACE FOR EXPERT SYSTEMS APLIED TO POWER PLANT MAINTANANCE AND TROUBLESHOOTING'

## Beschreibung

Die Erfindung betrifft ein Archivsystem nach dem Oberbegriff des Patentanspruchs 1.

Der Dialog zwischen Mensch und Computer läuft heute noch in der Regel über Tastatur oder Maus und Anzeigeeinrichtung ab. Die automatische Erkennung der menschlichen Sprache hat in den vergangenen Jahren zu einem breiten Spektrum von Spracherkennungssystemen geführt. Dieses Spektrum reicht vom Erkennen einzelner gesprochener Steuerbefehle, z.B. sprecherabhängige Einzelworterkenner, bis zum Verstehen natürlicher Sprache, z.B. sprecherunabhängige Worterkenner.

Die Anwendung der Spracheingabe bei einem Computer ist beispielsweise aus der DE-PS 33 17 325 bekannt. Der Computer enthält u.a. eine Programmspeichereinrichtung, in welcher eine Vielzahl von Programmen gespeichert ist. Zum Aufruf eines bestimmten Programms muß der Benutzer eine Programmnummer oder ein Programm-Schlüsselwort, welches dem Programmnamen entspricht, eingeben. Um die Schlüsselwort-Eingabe und den Programmaufruf zu vereinfachen, sind eine Spracherkennungseinrichtung, ein Referenzmuster-Speicher sowie eine Speichereinrichtung zur Speicherung einer Vielzahl von Schlüsselwörtern vorgesehen. Die Spracherkennungseinrichtung erkennt das durch Spracheingabe eingegebene Schlüsselwort, vergleicht dieses Schlüsselwort mit dem in der Speichereinrichtung eingegebenen Schlüsselwort und gibt bei Übereinstimmung automatisch eine durch Tasteneingabe vorgegebene Startnummer aus. Hierdurch ist der Ablauf eines bestimmten Programms auch dann möglich, wenn sich der Benutzer lediglich an dessen Programmnamen oder an das entsprechende Schlüsselwort erinnert, ohne daß er sich an die Startadresse selbst erinnert.

Weitere Anwendungen eines Spracherkennungssystems, bei dem Einzelwörter zum Programmabruf eingegeben werden, sind aus der DE-OS 37 09 670 oder der DE-PS 37 11 085 bekannt.

Bei dem Haushaltsgerät gemäß der DE-OS 37 09 670 erfolgt die Auswahl eines Arbeitsprogramms durch Erkennen und Auswerten eines vom Gerätebenutzer gesprochenen Codeworts. Die Codeworte (Steuerbefehle) werden vom Gerätebenutzer in einer "Trainings phase" über Mikrofon eingegeben oder das Haushaltsgerät enthält in einem Speicher einen fest vorgegebenen Sprachmuster-Wortschatz. Zur Kontrolle können die vom Benutzer eingegebenen Codeworte optisch oder akustisch bestätigt werden.

Bei der aus der DE-PS 37 11 085 bekannten Textverarbeitungsanordnung erfolgt der Aufruf fest vorgegebener Textbausteine und das automatische Einfügen in einen zu schreibenden Text ebenfalls durch ein gesprochenes Codewort. Die Textverarbeitungsanordnung besteht aus einem Diktiergerät, zur Speicherung des Diktats und der Codeworte noch einzufügender Textbausteine, und aus einem Schreibgerät, welches bei einer Ausführungsform als Decodiereinrichtung eine Spracherkennungseinrichtung enthält. Ist als Schreibgerät ein Personal-Computer vorgesehen, so können am Monitor die zur Auswahl der Textbausteine erforderlichen Codeworte zur Kontrolle in den manuell geschriebenen Text eingeblendet werden.

Schließlich ist aus der EP-A2-0 294 657 ein Verfahren zur Steuerung einer Datenverarbeitungsanlage bekannt. Die Steuerung kann entweder allein durch Sprach-Steuerbefehle oder durch Kombination von Sprach- und Berührungsbefehlen erfolgen. Beispielsweise kann ein auf dem Bildschirm eines Monitors der Datenverarbeitungsanlage dargestelltes Dokument oder Teile des Dokuments durch Berührung des Bildschirms gekennzeichnet werden. Die Weiterverarbeitung dieses so gekennzeichneten Dokuments, z. B. "Senden nach" "Ausdrucken", "Ablage", "Wieder vorlage" usw. kann durch Sprachbefehle vorgenommen werden, Bei einer Ausgestaltung der Datenverarbeitungsanlage als Archivsystem erfolgt die Dokumenteneingabe in einen Massenspeicher über einen Scanner. Dabei wird das Dokument mit Hilfe eines Druckers mit einem Code versehen, um das Dokument im Massenspeicher wieder auffindbar zu machen. Um den unerlaubten Zugriff zu den im Massenspeicher enthaltenen Dokumenten zu verhindern, kann die Zugangsberechtigung durch ein gesprochenes Codewort festgelegt werden.

Die sprachgesteuerten Geräte, Systeme oder Anlagen enthalten in der Regel also einen Sprachverarbeitungsprozessor, welcher mit einem, Referenzmuster-Speicher, z.B. Magnetbandspeicher, Halbleiterspeicher, Diskette, Festplatte usw. in Verbindung steht. Die Spracheingabe beschränkt sich dabei in der Regel auf die Eingabe von Steuerbefehlen zur Funktionssteuerung oder auf die Dialogsteuerung bei der Kommunikation zwischen Mensch und Informationssystem mit Sprachein- und -ausgabe. Die meisten Spracherkennungssysteme sind sprecherabhängig, d.h. jeder Sprecher muß in einer "Trainingsphase" dem Spracherkennungssystem seine Sprachmuster durch ein- oder mehrmaliges Sprechen bekanntmachen, wodurch sogenannte Referenzmuster gewonnen werden. Sprecherabhängige Spracherkennungssysteme ermöglichen die sprecherabhängige Erkennung von einzelnen gesprochenen Worten aus einem aufgabenspezifisch festgelegten Wortschatz, von bis zu 1000 Worten. Die damit erreichbare Fehlerrate liegt unter 2%. Neben der Eingabe von Einzelwörtern ist auch die Eingabe von Wortketten möglich. Die Eingabe von Wortketten bedeutet in der Regel ein geringeres Vokabular, höhere Fehlerraten und einen hohen Schaltungsaufwand.

Bei sprecherunabhängigen Spracherkennungssystemen ist keine vorbereitende "Trainingsphase" notwendig. Bei einem solchen System werden die Sprachstichproben vieler Sprecher herangezogen und je nach Ähnlichkeit zu sogenannten Clustern zusammengefasst. Sprecherunabhängige Spracherkennungssysteme sind meist für ein bestimmtes Vokabular und ein spezielles akustisches Umfeld ausgelegt. In der Regel liegt dabei die mittlere Fehlerrate zwischen 2 und 3%.

Wie Untersuchungen deutlich zeigten, kann nur in wenigen Fällen die Tastatur durch Spracheingabeeinrichtungen ersetzt werden. Letztendlich müssen neue Systemkonzepte entwickelt werden. Bei der Konzeption eines Archivsystems muß vor allem berücksichtigt werden, daß eine einfache Handhabung und eine effiziente Kommunikation beim Speichern und Abrufen von Dokumenten ermöglicht werden. Die aus der bereits erwähnten EP-A2-0 294 657 oder aus der EP-B1-0 051 258 bekannten Archivsysteme erlauben zwar eine sehr einfache Handhabung der Informationseingabe über den Scanner und ermöglichen sogar die Eingabe von Sprach-Steuerbefehlen.

Diese Archivsysteme zeigen jedoch keinen Lösungsweg dahingehend auf, wie auf einfache Art und Weise das eingegebene Dokument mit einer dessen Inhalt kennzeichnenden Information, d.h. Suchbegriffen, versehen werden kann.

Weiterhin ist aus der EP-A2-0 150 813 ein Archivsystem mit einer Abtasteinrichtung zur Umwandlung von Dokumenten in Bilddaten, mit einem mit der Abtasteinrichtung verbundenen Massenspeicher zur Speicherung der Dokumente zusammen mit einer zugehörigen Identifizierungsinformation und mit einer Tastatur zur Eingabe von Befehlen und/oder Zeichen bekannt. Schließlich ist eine Steuereinrichtung zur Steuerung von Funktionen des Archivsystems vorgesehen, welche mit einem Spracherkennungssystem mit einer Spracheingabeeinrichtung verbunden ist. Über diese SprachEingabeeinrichtung können durch den Benutzer Befehle zum Einrichten des Archivs und/oder zum Ablegen von Dokumenten und/oder zum Suchen von Dokumenten und/oder zum Ausgeben der Dokumente eingegeben werden.

Der Erfindung liegt die Aufgabe zugrunde, ein Archivsystem derart auszugestalten, daß dem Benutzer die tägliche Arbeit erleichtert wird.

Diese Aufgabe wird bei einem gattungsgemäßen Archivsystem durch die kennzeichnenden Merkmale des Patentanspruchs 1 gelöst.

Das sprachgesteuerte Archivsystem, auch als Arc-Voice-System bezeichnet, ermöglicht erstmalig die Nutzung der Sprachein- und -ausgabe bei einem Archivsystem, Datenbank usw. Voraussetzung für die Nutzung war die Erkenntnis, daß die Leistungsfähigkeit des Spracherkennungssystems dann gesteigert werden kann, wenn über die Identifikation des reinen Lautmaterials hinaus bei der Worterkennung auf "Vorwissen" zurückgegriffen wird. "Vorwissen" bedeutet in diesem Zusammenhang, daß durch eine Plausibilitätsprüfung von vornherein unsinnige oder widersprüchliche Ergebnisse ausgeschlossen werden. Ist das Sortier- bzw. Suchkriterium beispielsweise ein Datum, so wird bei einer Spracheingabe "15. August 87" die Plausibilitätsprüfung auf einen Vergleich, und zwar in gleicher Reihenfolge mit Zahlen bzw. Monatsnamen beschränkt. Durch die Beschränkung auf die Erkennung von Einzelwörtern (was zwar eine skandierende Sprechweise bedingt) kann der Aufwand hierfür relativ gering gehalten werden. Weiterhin weist das Arc-Voice-System den entscheidenden Vorteil auf, daß auch ein ungeübter Benutzer sehr viel schneller beispielsweise Suchbegriffe eingeben kann, als selbst für eine geübte Schreibkraft dies mit der sonst üblichen Eingabe per Schreibmaschinentastatur möglich wäre.

Die Ausführungsform gemäß Patentanspruch 2 weist den Vorteil auf, daß durch die optische Rückmeldung sichergestellt werden kann, daß das Spracherkennungssystem die Übersetzung des gesprochenen Worts in entsprechende Maschinenbefehle bzw. computercompatible Daten richtig vorgenommen hat. Der sonst für Spracherkennungssysteme typische Fehler, daß durch phonetische Lautmerkmale und unterschiedliche Artikulierung die eigentliche Information übersehen wird, kann dabei zuverlässig vermieden werden.

Die Ausführungsform des sprachgesteuerten Archivsystems gemäß Patentanspruch 3 weist einen hohen Bedienkomfort auf. Wie Untersuchungen zeigten, ist mit einer optischen und/oder akustischen Bedienerführung neben der Arbeitserleichterung auch sichergestellt, daß das System vom Benutzer akzeptiert wird. Reagiert das System auf Steuerbefehle und/oder Dateneingaben des Benutzers mit Fragen (vor allem bei Unklarheiten) oder Erklärungen oder Bestätigungen, so kann der Benutzer durch die Rückmeldungen zuverlässig Erkennungsfehler des sprachgesteuerten Archivsystems (Arc-Voice-System) feststellen. Weiterhin wird auch einem Ungeschulten die Arbeit mit dem sprachgesteuerten Archivsystem ermöglicht, da spezielle Vorkenntnisse durch die Bedienerführung nicht erforderlich sind und auch die Eingabe über die Tastatur vermieden wird. Die Bedienerführung in Verbindung mit einer einfach handzuhabenden Bedienung stellt ein schnelles und problemloses Speichern, Bearbeiten und Abrufen der Dokumente sicher.

Wird gemäß der Ausführungsform nach Patentanspruch 4 an das sprachgesteuerte Archivsystem ein Diktiergerätemikrofon angeschlossen, so ist der Aufwand für die Spracheingabe- und -ausgabe in den und aus dem Computer relativ gering. Auch die Benutzung des sprachgesteuerten Archivsystems als Diktiergerät wird hierdurch ermöglicht.

Wird gemäß der Ausführungsform des sprachgesteuerten Archivsystems nach Patentanspruch 5 zu jedem abzulegenden Dokument mindestens ein Suchbegriff zugeordnet, so kann - beispielsweise bei der später erfolgenden Suche nach einem bestimmten Dokument - auf einfache Art und Weise der Suchbereich eingeschränkt werden. Wird beispielsweise der Suchbegriff "Archivsystem" eingegeben und automatisch werden Verknüpfungen dieses Suchbegriffs mit anderen Suchbegriffen in den Dokumenten angezeigt, z.B. der Suchbegriff "sprachgesteuertes Archivsystem" oder "Spracherkennungssystem" oder "Grundig" usw. ausgegeben, so kann die Suche nach einem bestimmten Dokument in der Regel verkürzt werden.

Damit ist auch eine Arbeitserleichterung beim Speichern der Dokumente möglich. Der Benutzer kann sich die Liste von verbundenen Suchwörtern ausgeben lassen und jene auswählen, welche das zu speichernde Dokument genau kennzeichnen.

Die Ausgestaltung des sprachgesteuerten Archivsystems gemäß Patentanspruch 6 ermöglicht auch dann eine einfache Handhabung, wenn eine Vielzahl von Dokumenten und zugeordneten Suchbegriffen gespeichert sind. Durch die Zuordnung von Suchbegriffen und Suchkriterien wird die Voraussetzung dafür geschaffen, daß der Benutzer beispielsweise bei der Suche nach einem bestimmten Dokument schrittweise den Suchbereich einengen kann.

Werden gemäß der Ausführungsform nach Patentanspruch 7 die Suchkriterien bzw. die zugeordneten Suchbegriffe ausgegeben, so kann der Benutzer anhand der ausgegebenen Information entscheiden, ob dies die gewünschte Information sein kann oder nicht. Vorzugsweise wird das zuletzt ausgegebene Suchkriterium und/oder der Suchbegriff beim neuen Suchvorgang zuerst ausgegeben. Dabei kann die Eingabe derart vereinfacht werden, daß der Benutzer nur noch das ausgegebene Wort zu bestätigen braucht.

Weitere bevorzugte Ausgestaltungen des sprachgesteuerten Archivsystems sind in den Unteransprüchen gekennzeichnet.

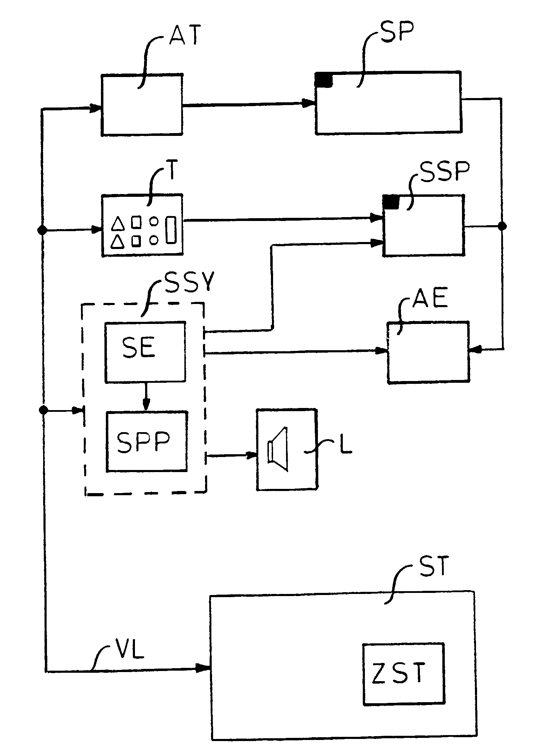

Die Erfindung wird im folgenden anhand einer in der Zeichnung dargestellten Ausführungsform näher beschrieben und erläutert.

Die Figur zeigt das Blockschaltbild einer Ausführungsform des sprachgesteuerten Archivsystems (Arc-Voice-System). Das Archivsystem enthält eine Steuereinrichtung ST mit Programmspeicher, welche über bidirektionale Verbindungsleitungen VL mit den verschiedenen Einrichtungen zur Funktionssteuerung verbunden ist.

Das Archivsystem weist eine Abtasteinrichtung AT (Scanner) auf, welche die aufgelegte Seite des Dokuments zur fotoelektrischen Umwandlung zweidimensional abtastet. Die vom Scanner AT abgetasteten Dokumente werden in einem Massenspeicher SP, vorzugsweise einem Magnetbandspeicher, in der Reihenfolge ihrer Eingabe gespeichert. Ist beim Scanner AT eine Auflösung von 200 dpi gewählt, so beträgt die Speicherkapazität des Magnetbandes pro Stunde Laufzeit ca. 1200 Seiten DIN-A4. Im File-Vorspann des Magnetbandes befindet sich eine Inhaltsangabe der auf dem Magnetband abgespeicherten Dokumente. Diese Inhaltsangabe enthält u.a. Angaben über den Ort der Speicherung auf dem Magnetband, d.h. die Dokumenten-Adresse, und die diesem Dokument zugeordneten Suchbegriffe, Suchkriterien usw.

Bei herkömmlichen Archivsystemen erfolgt die Eingabe von Befehlen und/oder Zeichen, insbesondere die Eingabe von Suchbegriffen, mit einer Tastatur T. Diese den Inhalt des Dokuments kennzeichnenden Suchbegriffe, Suchkriterien usw. werden in einem Suchbegriffsspeicher SSP gespeichert.

Beim sprachgesteuerten Archivsystem gemäß der Erfindung kann der Benutzer über ein mit dem Suchbegriffsspeicher SSP verbundenes Spracherkennungssystem SSY eine entsprechende Eingabe vornehmen. Das Spracherkennungssystem SSY enthält u.a. eine Spracheingabeeinrichtung SE und einen mit dieser verbundenen Sprachprozessor SPP. Der Sprachprozessor SPP ist mit der Steuereinrichtung ST verbunden. Hierdurch ist es möglich, in Zusammenarbeit von Sprachprozessor SPP und Steuereinrichtung ST entsprechend dem Funktionsablauf der jeweils durchzuführenden Funktionen oder der Wortgruppe usw. eine Plausibilitätsprüfung vorzunehmen. Gibt beispielsweise der Benutzer den Steuerbefehl "einschreiben" ein, so erkennt die Steuereinrichtung ST anhand des Funktionsablaufs, welcher Steuerbefehl nun vom Benutzer ein zugeben ist und gibt dem Sprachprozessor SPP ein entsprechendes Referenzmuster vor.

Weiterhin enthält das Archivsystem eine Anzeigeeinrichtung AE, vorzugsweise ein Sichtgerät mit einem Bildschirm. Die Anzeigeeinrichtung AE erfüllt zwei Aufgaben; erstens wird das Bild einer abgetasteten oder archivierten Seite eines Dokuments angezeigt und zweitens können Dialog-Menues, sortierte Dokumenten-Listen, Störungsmeldungen, Help-Menues, Anzeigen für eine optische Bedienerführung usw. dargestellt werden.

Neben der optischen Bedienerführung kann über eine mit dem Spracherkennungssystem SSY verbundene Sprachausgabeeinrichtung L eine akustische Bedienerführung ermöglicht werden.

Bei einer in der Zeichnung nicht dargestellten Ausführungsform ist als Spracheingabe- und/oder -ausgabeeinrichtung ein Diktiergerätemikrofon vorgesehen.

Bei der Archivierung des von der Abtasteinrichtung AT gerade abgetasteten Dokuments legt der Benutzer die zugehörigen Suchbegriffe, Suchkriterien usw. fest. Diese eingegebenen, das Dokument inhaltlich kennzeichnenden Informationen werden mit der zugehörigen Adresse in den Suchbegriffsspeicher SSP abgespeichert. Dabei können im Suchbegriffsspeicher SSP die Sprachdaten oder die in maschinenlesbare Worte umgesetzten Sprachsignale abgespeichert werden.

Die Steuereinrichtung ST enthält für die Durchführung der Archivierung eine spezielle Einrichtung, die sogenannte Zugriffseinrichtung ZST. Die Aufgaben der Zugriffseinrichtung ZST sind u.a. die Zuordnung von Suchbegriff und Suchkriterium, die Steuerung der Ausgabe der gespeicherten Suchkriterien, die einem Suchkriterium zugeordneten Suchbegriffe usw.

## Patentansprüche

1. Archivsystem mit einer Abtasteinrichtung (AT) zur Umwandlung, insbesondere zur fotoelektrischen Umwandlung, von Dokumenten in Bilddaten, mit einem mit der Abtasteinrichtung (AT) verbundenen Massenspeicher (SP), insbesondere Magnetbandspeicher, zur Speicherung der Dokumente, mit einer Tastatur (T) zur Eingabe von Befehlen und/oder Zeichen, insbesondere zur Eingabe von Suchbegriffen, mit einer Steuereinrichtung (ST) zur Steuerung von Funktionen des Archivsystems, mit einem Spracherkennungssystem (SSY) mit einer Spracheingabeeinrichtung (SE), wobei über diese SprachEingabeeinrichtung (SE) durch den Benutzer Befehle zum Einrichten des Archivs und/oder zum Ablegen von Dokumenten und/oder zum Suchen von Dokumenten und/oder zum Ausgeben der Dokumente eingebbar sind,
**dadurch gekennzeichnet,**
daß das Spracherkennungssystem (SSY) mit einem Suchbegriffsspeicher (SSP) verbunden ist, daß über dieses Spracherkennungssystem (SSY) durch den Benutzer Suchbegriffe in den Suchbegriffsspeicher (SSP) eingebbar sind und daß das Spracherkennungssystem (SSY) einen mit der Spracheingabeeinrichtung (SE) und der Steuereinrichtung (ST) verbundenen Sprachprozessor (SPP) aufweist, welcher bei der Befehls- und/oder Worterkennung eine Plausibilitätsprüfung derart vornimmt, daß durch Zugreifen auf vorher eingegebene Such- oder Sortierkriterien die Suche für das nächste zu erkennende Kriterium beschränkt wird, wodurch die Erkennung beschleunigt wird.

2. Archivsystem nach Anspruch 1,
**dadurch gekennzeichnet,**
daß eine mit der Steuereinrichtung (ST), dem Spracherkennungssystem (SSY), dem Suchbegriffsspeicher (SSP) und dem Massenspeicher (SP) verbindbare Anzeigeeinrichtung (AE) vorgesehen ist und daß an der Anzeigeeinrichtung (AE) die vom Spracherkennungssystem (SSY) erkannten Befehle oder Worte zur Kontrolle angezeigt werden.

3. Archivsystem nach Anspruch 1 oder 2,
**dadurch gekennzeichnet**,
daß zusätzlich im Archivsystem eine mit dem Spracherkennungssystem (SSY) verbundene Sprachausgabeeinrichtung (L) angeordnet ist, wodurch eine Sprachausgabe der vom Spracherkennungssystem (SSY) erkannten Befehle oder Worte und eine akustische Bedienerführung ermöglicht wird.

4. Archivsystem nach einem oder mehreren der Ansprüche 1 bis 3,
**dadurch gekennzeichnet**,
daß als Spracheingabe- und/oder -ausgabeeinrichtung ein Diktiergerätemikrofon benutzt wird und daß die über das Diktiergerätemikrofon ein- und/oder ausgebbaren Sprachsignale einer Analog-Digital-Wandlung und, ebenso wie die über Bedientasten eingebbaren Steuerbefehle, einer Umsetzung in Maschinenworte mittels einer Codierschaltung unterzogen werden.

5. Archivsystem nach Anspruch 1,
**dadurch gekennzeichnet**,
daß die Steuereinrichtung (ST) eine Zugriffseinrichtung (ZST) enthält, welche zu jedem im Massenspeicher (SP) abzulegenden Dokument den oder die eingegebenen Suchbegriffe und eine Dokumenten-Adresse zuordnet und welche den oder die Suchbegriffe und die Dokumenten-Adresse im Suchbegriffsspeicher (SSP) speichert und daß bei der Eingabe eines Suchbegriffs automatisch die dem oder den Dokumenten zugeordneten Suchbegriffe ausgebbar sind.

6. Archivsystem nach einem oder mehreren der Ansprüche 1 bis 5,
**dadurch gekennzeichnet**,
daß beim Einrichten des Archivs Suchkriterien vorgebbar sind und daß die Zugriffseinrichtung (ZST) jedem Suchbegriff mindestens ein Suchkriterium zuordnet.

7. Archivsystem nach Anspruch 6,
**dadurch gekennzeichnet**,
daß vor dem Ablegen und/oder Suchen von Dokumenten die gespeicherten Suchkriterien ausgebbar sind und daß bei der Eingabe eines Suchkriteriums, die dem Suchkriterium zugeordneten Suchbegriffe ausgebbar sind.

8. Archivsystem nach Anspruch 6 oder 7,
**dadurch gekennzeichnet**,
daß beim Einrichten des Archivs das Suchkriterium über die Tastatur (T) eingebbar ist und daß beim Ablegen und/oder Suchen von Dokumenten die Eingabe des Suchkriteriums über die Spracheingabeinrichtung (SE) erfolgt.

9. Archivsystem nach einem oder mehreren der Ansprüche 1 bis 8,
**dadurch gekennzeichnet**,
daß das Suchkriterium und/oder die Suchbegriffe optisch an der Anzeigeeinrichtung (AE) und/oder akustisch über die Sprachausgabeeinrichtung (L) ausgegeben werden.

## Claims

1. Archive system having a scanning device (AT) for the conversion, in particular for the photoelectric conversion, of documents into image data, having a mass memory (SP), in particular magnetic tape memory, connected to the scanning device (AT), for storing the documents, having a keyboard (T) for inputting commands and/or characters, in particular for inputting search phrases, having a control device (ST) for controlling functions of the archive system, having a speech recognition system (SSY) with a speech inputting device (SE), it being possible for the user to input via said speech input device (SE) commands for creating the archive and/or for storing documents and/or for locating documents and/or for outputting the documents,
characterized in that the speech recognition system (SSY) is connected to a search-phrase memory (SSP), in that search phrases can be inputted by the user into the search-phrase memory (SSP) via said speech recognition system (SSY), and in that the speech recognition system (SSY) has a speech processor (SPP) which is connected to the speech inputting device (SE) and the control device (ST) and which, during the command and/or word recognition, carries out a plausibility check in such a way that the search for the next criterion to be recognized is limited by accessing previously inputted search or sorting criteria, thereby accelerating the recognition.

2. Archive system according to Claim 1, characterized in that a display device (AE) is provided which can be connected to the control device (ST), the speech recognition system (SSY), the search-phrase memory (SSP) and the mass memory (SP), and in that the commands or words recognized by the speech recognition system (SSY) are displayed on the display device (AE) as a check.

3. Archive system according to Claim 1 or 2,
characterized in that a speech output device (L) connected to the speech recognition system (SSY) is additionally disposed in the archive system, thereby making possible a speech output of the commands or words recognized by the speech recognition system (SSY) and an audible operator prompt.

4. Archive system according to one or more of Claims 1 to 3, characterized in that a dictating machine microphone is used as speech inputting and/or speech outputting device and in that the speech signals which can be inputted and/or outputted via the dictation machine microphone can be subjected to an analog/digital conversion and, exactly like the control commands which can be inputted via the operating keys, can be subjected to a conversion into machine words by means of a coding circuit.

5. Archive system according to Claim 1, characterized in that the control device (ST) contains an access device (ZST) which assigns the inputted search phrase or phrases and a document address to every document to be stored in the mass store (SP) and which stores the search phrase or phrases and the document address in the search-phrase memory (SSP) and in that the search phrases assigned to the document or documents can be outputted automatically on inputting a search phrase.

6. Archive system according to one or more of Claims 1 to 5, characterized in that search criteria are specifiable during the creation of the archive and in that the access device (ZST) assigns at least one search criterion to every search phrase.

7. Archive system according to Claim 6, characterized in that the stored search criterion can be outputted before storing and/or locating documents and in that the search phrasess assigned to the search criterion can be outputted on inputting a search criterion.

8. Archive system according to Claim 6 or 7,
characterized in that the search criterion can be inputted via the keyboard (T) during the creation of the archive and in that the search criterion is inputted via the speech inputting device (SE) during the storage and/or location of documents.

9. Archive system according to one or more of Claims 1 to 8, characterized in that the search criterion and/or the search phrases are outputted visually on the display device (AE) and/or audibly via the speech outputting device (L).

## Revendications

1. Système d'archivage comportant un dispositif d'exploration par balayage (AT) pour la conversion, notamment pour la conversion photoélectrique, de documents en des données d'images, comportant une mémoire de masse (SP) reliée au dispositif d'exploration par balayage (AT), notamment une mémoire à bande magnétique, pour mémoriser les documents, un clavier (T) pour introduire des instructions et/ou des signes, notamment pour l'introduction de termes de recherche, comportant un dispositif de commande (ST) servant à commander des fonctions du système d'archivage, un système (SSY) de reconnaissance vocale comportant un dispositif d'introduction de signaux vocaux (SE), et dans lequel des instructions pour établir les archivages et/ou mémoriser des documents et/ou rechercher des documents et/ou sortir des documents peuvent être introduites par l'utilisateur par l'intermédiaire de ce dispositif d'entrée vocale (SE),
caractérisé en ce
que le système de reconnaissance vocale (SSY) est relié à une mémoire (SSP) de termes de recherche, que des termes de recherche peuvent être introduits dans la mémoire de termes de recherche (SSP) par l'utilisateur à l'aide de ce système de reconnaissance vocale (SSY) et que le système de reconnaissance vocale (SSY) comporte un processeur vocal (SPP), qui est relié au dispositif d'entrée vocale (SE) et au dispositif de commande (ST) et qui, lors de la reconnaissance d'une instruction et/ou d'un mot, exécute un contrôle de vraisemblance de telle sorte que, par suite de l'accès à des critères de recherche ou de tri introduits au préalable, la recherche est limitée au critère immédiatement suivant à reconnaî tre, ce qui accélère la reconnaissance.

2. Système d'archivage selon la revendication 1, caractérisé en ce qu'il est prévu un dispositif d'affichage (AE), qui peut être relié au dispositif de commande (ST), au système de reconnaissance vocale (SSY), à la mémoire de termes de recherche (SSP) et à la mémoire de masse (SP) et que les instructions ou mots pour le contrôle, qui sont reconnus par le système de reconnaissance vocale (SSY), sont affichées sur le dispositif d'affichage (AE).

3. Système d'archivage selon la revendication 1 ou 2, caractérisé en ce qu'il est prévu en supplément, dans le système d'archivage, un dispositif de sortie vocale (L) relié au système de reconnaissance vocale (SSY), ce qui a pour effet qu'une sortie vocale des instructions ou des mots, reconnus par le système de reconnaissance vocale (SSY), et un guidage acoustique de l'utilisateur deviennent possibles.

4. Système d'archivage selon une ou plusieurs des revendications 1 à 3, caractérisé en ce qu'on utilise un microphone de dictaphone comme dispositif d'entrée et/ou de sortie vocale et que les signaux vocaux pouvant être introduits et/ou délivrés par l'intermédiaire du microphone du dictaphone sont soumis à une conversion analogique/numérique et, de même que les instructions de commande pouvant être introduites par l'intermédiaire des touches de commande, à une conversion en des mots machine à l'aide d'un circuit de codage.

5. Système d'archivage selon la revendication 1, caractérisé en ce que le dispositif de commande (ST) contient un dispositif d'accès (ZST), qui associe à chaque document devant être mémorisé dans la mémoire de masse (SP), le ou les termes introduits et une adresse de document et qui mémorise le ou les termes de recherche et l'adresse de document dans la mémoire de termes de recherche (SSP) et que, lors de l'introduction d'un terme de recherche, les concepts de recherche associés au(x) document(s) peuvent être délivrés automatiquement.

6. Système d'archivage selon une ou plusieurs des revendications 1 à 5, caractérisé en ce que lors de la gestion des archives, des critères de recherche peuvent être prédéterminés et que le dispositif d'accès (ZST) associe à chaque terme de recherche au moins un critère de recherche.

7. Système d'archivage selon la revendication 6, caractérisé en ce que les critères de recherche mémorisés peuvent être délivrés avant la mémorisation et/ou la recherche de documents et que, lors de l'introduction d'un tel critère de recherche, les termes de recherche associés au critère de recherche peuvent être délivrés.

8. Système d'archivage selon la revendication 6 ou 7, caractérisé en ce que lors de la gestion des archives, le critère de recherche peut être introduit au moyen du clavier (T) et que lors de la mémorisation et/ou de la recherche de documents, l'introduction du critère de recherche s'effectue par l'intermédiaire du dispositif d'entrée vocale (SE).

9. Système d'archivage selon une ou plusieurs des revendications 1 à 8, caractérisé en ce que le critère de recherche et/ou les termes de recherche sont délivrés optiquement sur le dispositif d'affichage (AE) et/ou acoustiquement par l'intermédiaire du dispositif de sortie vocale (L).
